# EUROPEAN PATENT SPECIFICATION

(11) **EP 2 585 890 B1**
(45) Date of publication and mention of the grant of the patent: **25.02.2015**
(21) Application number: 11760824.0
(22) Date of filing: 24.06.2011
(51) Int. Cl.: G06F 1/24

(54) **ELECTRONIC CONTROL UNIT AND CONTROL METHOD THEREOF**
ELEKTRONISCHE STEUEREINHEIT UND VERFAHREN ZU IHRER STEUERUNG
MODULE DE COMMANDE ÉLECTRONIQUE (MCE) ET PROCÉDÉ DE COMMANDE ASSOCIÉ

(30) Priority: 28.06.2010 JP 2010146153
(43) Date of publication of application: 01.05.2013
(73) Proprietor: TOYOTA JIDOSHA KABUSHIKI KAISHA, Toyota-shi, Aichi-ken, 471-8571 (JP)
(72) Inventor: MASUDA, Tomokazu, Toyota-shi Aichi-ken 471-8571 (JP); TSUTSUI, Yusuke, Toyota-shi Aichi-ken 471-8571 (JP)
(74) Representative: Intès, Didier Gérard André
(86) International application number: PCT/IB2011/001475
(87) International publication number: WO 2012/001482

(56) References cited:
- EP-A2- 1 832 464
- JP-A- 2008 242 995
- US-A1- 2006 053 235

## Description

### BACKGROUND OF THE INVENTION

### 1. Field of the Invention

The invention relates to an electronic control unit and a control method thereof. More particularly, the invention relates to technology that performs a process reset operation after rewriting a program of an electronic control unit.

### 2. Description of Related Art

An electronic control unit (ECU) that controls equipment, such as an internal combustion engine, an automatic transmission, an electric motor, and accessories, onboard a vehicle is known. Typically, an ECU includes a central processing unit (CPU) and memory and the like. The equipment is controlled by the CPU executing programs stored in the memory. An ECU for controlling the ECU may also be provided.

Many ECUs are configured such that the programs can be rewritten. For example, a program can be rewritten by an operator connecting an external tool (such as a computer) for rewriting programs to the ECU. The rewriting of the program is completed by resetting the CPU.

Typically, the CPU is reset when an ignition switch is turned on again after being turned off. That is, the CPU is reset when power is supplied to the ECU again after being cut off. Such an ECU is disclosed, for instance, in US 2006/053235.

However, with some ECUs provided in an electric vehicle or a plug-in hybrid vehicle in which a battery can be charged with electric power supplied from outside the vehicle, for example, power is constantly supplied to ECU. For example, electric power supplied to a power supply ECU for starting and stopping a manager ECU that manages charging continues to be supplied even when the ignition switch is turned off. This is because, for example, a battery (an auxiliary battery) is always connected to the power supply ECU, so the CPU of the power supply ECU will not reset even if the ignition switch is turned off. An example is disclosed in EP 1 832 464.

In order to reset the CPU in this kind of ECU, a special program for resetting the CPU is necessary, as described in claim 3 and paragraph 100, etc. of Japanese Patent Application Publication No. 2008-242995 (JP-A-2008-242995). If such a special program is not provided, the cable that is connected to the battery must be temporarily disconnected from the battery in order to interrupt the electrical connection between the ECU and the battery.

However, with a special program for resetting the CPU, the structure of the control that is executed by this program may become complex. For example, if the rewriting of a program in memory is interrupted, it is necessary to consider what kind of process to perform if there was an abnormality in the operation of the CPU or the like.

When temporarily disconnecting the battery, it is necessary to open the hood and loosen a bolt, which increases the operational steps necessary to rewrite a program.

### SUMMARY OF THE INVENTION

The invention thus performs a process reset operation after rewriting a program, without requiring a complex program or a complex operation.

A first aspect of the invention relates to an electronic control unit that includes a processing portion that executes a process that controls equipment based on a program stored in memory, and resets the process upon receiving a first signal commanding a process reset; and a resetting portion that outputs the first signal to the processing portion when an ignition switch is turned off while a second signal instructing the processing portion to rewrite the program stored in the memory is input.

According to this aspect, the resetting portion outputs the first signal commanding a process reset to the processing portion in response to the ignition switch being turned off, only when there is a command to rewrite the program stored in the memory. As a result, the process reset operation is performed by an operator simply turning off the ignition switch after the program has been rewritten. The execution itself of the process reset operation is performed according to a determination made by the operator, so for example, if the rewriting of a program in memory is interrupted, a complex program that takes into account a case in which the operation of the CPU is abnormal or the like is not necessary. Also, the operator is able to reset the processing portion without opening the hood and turning a bolt. As a result, a process reset operation after a program has been rewritten can be performed without the need for a complex program and a complicated operation.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a block diagram schematically showing a plug-in hybrid vehicle according to example embodiments of the invention;
FIG 2 is an alignment graph of a power split device according to the example embodiments of the invention;
FIG 3 is a first diagram of an electrical system of the plug-in hybrid vehicle according to the example embodiments of the invention;
FIG 4 is a second diagram of the electrical system of the plug-in hybrid vehicle according to the example embodiments of the invention;
FIG 5 is a view of a connector of a charge cable according to the example embodiments of the invention;
FIG 6 is a block diagram of a power supply ECU according to a first example embodiment of the invention; and
FIG 7 is a block diagram of a power supply ECU according to a second example embodiment of the invention.

### DETAILED DESCRIPTION OF EMBODIMENTS

Example embodiments of the present invention will be described in greater detail below with reference to the accompanying drawings. In the following description, like parts will be denoted by like reference characters and referred to by the same nomenclature and have the same functions. Therefore, detailed descriptions of those parts will not be repeated.

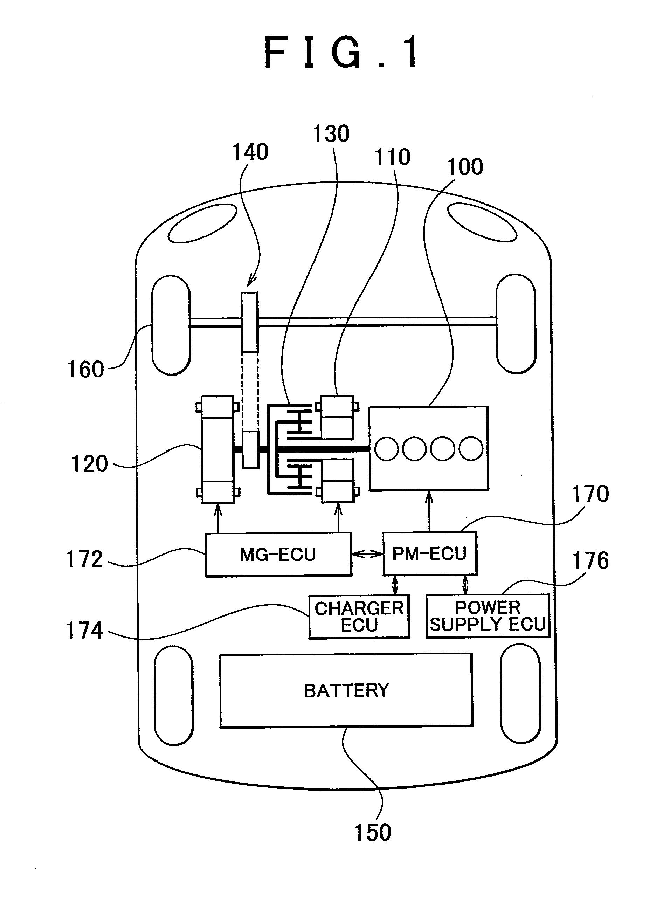

A plug-in hybrid vehicle provided with an electronic control unit according to a first example embodiment of the invention will be described with reference to FIG 1. This vehicle includes an internal combustion engine 100, a first motor-generator 110, a second motor-generator 120, a power split device 130, a reduction gear 140, and a battery 150.

This vehicle runs using driving force generated by at least one of the internal combustion engine 100 or the second motor-generator 120. Incidentally, a fuel cell vehicle Or an electric vehicle that runs by only the driving force from an electric motor may be used instead of a plug-in hybrid vehicle. Also, a vehicle provided only with the internal combustion engine 100 as the driving source may also be used.

The internal combustion engine 100, the first motor-generator 110, and the second motor-generator 120 are connected together via the power split device 130. Power generated by the internal combustion engine 100 is split into two paths by the power split device 130. One path is a path for driving front wheels 160 via the reduction gear 140, and the other path is a path for driving the first motor-generator 110 to generate electric power.

The first motor-generator 110 is a three-phase alternating current motor that has three coils, i.e., a U-phase coil, a V-phase coil, and a W-phase coil. The first motor-generator 110 generates electric power using power from the internal combustion engine 100 that has been split by the power split device 130. The electric power generated by the first motor-generator 110 is used as the situation demands according to the running state of the vehicle and the state of charge (SOC) of the battery 150. For example, during normal running, the electric power generated by the first motor-generator 110 is used directly to drive the second motor-generator 120. On the other hand, when the SOC of the battery 150 is lower than a preset value, the electric power generated by the first motor-generator 110 is converted from alternating current to direct current by an inverter that will be described later. Then the voltage is regulated by a converter that will also be described later, and the electric power is stored in the battery 150.

When the first motor-generator 110 is used as a generator, the first motor-generator 110 generates negative torque. Here, negative torque refers to torque that becomes a negative load on the internal combustion engine 100. When the first motor-generator 110 receives a supply of electric power and functions as a motor, the first motor-generator 110 generates positive torque. Here, positive torque is torque that does not become a load on the internal combustion engine 100, i.e., torque that assists with the rotation of the internal combustion engine 100. Incidentally, this is also true for the second motor-generator 120.

The second motor-generator 120 is a three-phase alternating current motor that has three coils, i.e., a U-phase coil, a V-phase coil, and a W-phase coil. The second motor-generator 120 is driven by at least one of electric power stored in the battery 150 or electric power generated by the first motor-generator 110.

The driving force of the second motor-generator 120 is transmitted to the front wheels 160 via the reduction gear 140. Accordingly, the second motor-generator 120 assists the internal combustion engine 100 or runs the vehicle using the driving force from the second motor-generator 120. Incidentally, rear wheels may be driven instead of, or in addition to, the front wheels 160.

During regenerative braking of the plug-in hybrid vehicle, the second motor-generator 120 is driven by the front wheels 160 via the reduction gear 140, and the second motor-generator 120 operates as a generator. As a result, the second motor-generator 120 operates as a regenerative brake that converts braking energy into electric power. The electric power generated by the second motor-generator 120 is stored in the battery 150.

The power split device 130 is formed by a planetary gear set that includes a sun gear, pinion gears, a carrier, and a ring gear. The pinion gears are in mesh with the sun gear and the ring gear. The carrier rotatably supports the pinion gears. The sun gear is connected to a rotating shaft of the first motor-generator 110. The carrier is connected to the crankshaft of the internal combustion engine 100. The ring gear is connected to a rotating shaft of the second motor-generator 120 and to the reduction gear 140.

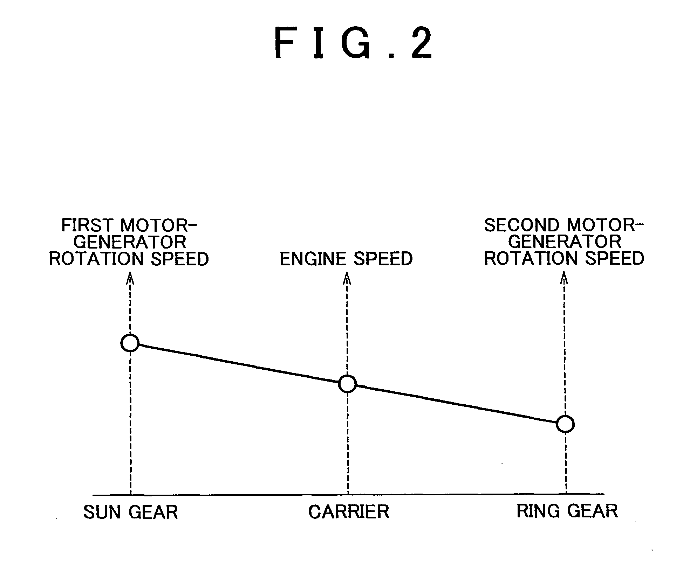

Because the internal combustion engine 100, the first motor-generator 110, and the second motor-generator 120 are all connected via the power split device 130 formed by a planetary gear, the relationship of the rotation speeds of the internal combustion engine 100, the first motor-generator 110, and the second motor-generator 120 is one in which the rotation speeds are connected by a straight line in an alignment graph, as shown in FIG 2.

Returning now to FIG 1, the battery 150 is a battery pack formed by a plurality of battery modules, each of which is formed by a plurality of battery cells integrated together, that are connected together in series. The voltage of the battery 150 is approximately 200 V, for example. Electric power supplied from an external power supply outside the vehicle, aside from the first motor-generator 110 and the second motor-generator 120, is charged to the battery 150.

In this example embodiment, the internal combustion engine 100 is controlled by a power train Manager-Electronic Control Unit (PM-ECU) 170. The first motor-generator 110 and the second motor-generator 120 are controlled by an MG-ECU 172. The PM-ECU 170 and the MG-ECU 172 are connected to enable bi-directional communication. In addition to the PM-ECU 170 and the MG-ECU 172, a charger ECU 174 is also provided in the plug-in hybrid vehicle. The PM-ECU 170 and the charger ECU 174 are connected to enable bi-directional communication. The PM-ECU 170 may also serve to control the MG-ECU 172 and the charger ECU 174, in addition to controlling the internal combustion engine 100.

For example, the MG-ECU 172 and the charger ECU 174 are controlled on (power on) and off (power off) according to a command signal from the PM-ECU 170. Also, the PM-ECU 170 outputs commands to the MG-ECU 172 regarding the electric power to be generated by the first motor-generator 110 and the electric power for driving from the second motor-generator 120 and the like. Furthermore, the PM-ECU 170 outputs a command to the charger ECU 174 regarding electric power to be charged to the battery 150.

The PM-ECU 170 can be stopped by a command from the PM-ECU 170 itself. Startup of the PM-ECU 170 is controlled by a power supply ECU 176. The power supply ECU 176 is always on as long as electric power continues to be supplied from an auxiliary battery 552.

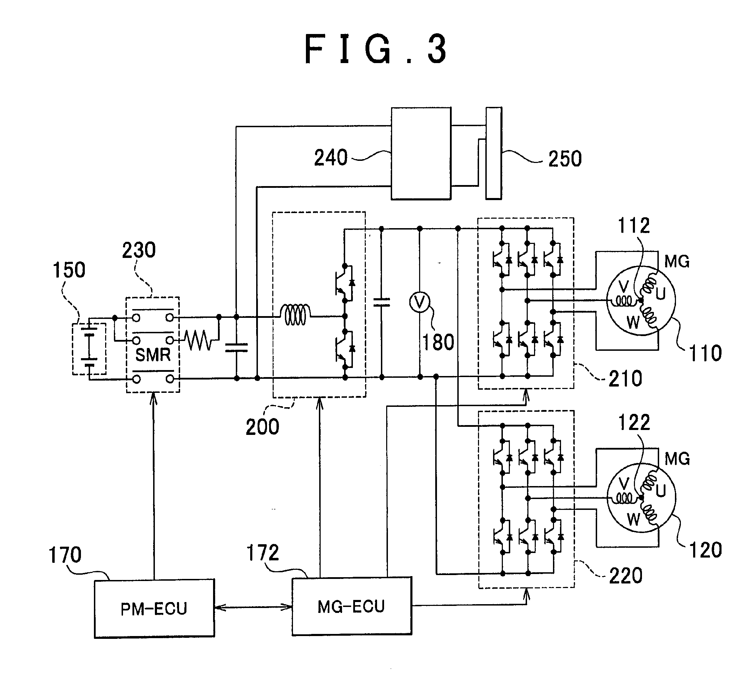

The electrical system of the plug-in hybrid vehicle will now be described in greater detail with reference to FIG 3. The plug-in hybrid vehicle includes a converter 200, a first inverter 210, a second inverter 220, a System Main Relay (SMR) 230, a charger 240, and an inlet 250.

The converter 200 includes a reactor, two npn-type transistors, and two diodes. One end of the reactor is connected to a positive terminal side of the battery 150, and the other end of the reactor is connected to a connecting point of the two npn-type transistors.

The two npn-type transistors are connected in series. The npn-type transistors are controlled by the MG-ECU 172. A diode is connected between a collector and emitter of each npn-type transistor such that current flows from the emitter side to the collector side.

Incidentally, Insulated Gate Bipolar Transistors (IGBTs), for example, may be used as the npn-type transistors. Instead of the npn-type-transistors, power switching elements such as power Metal Oxide Semiconductor Field-Effect Transistors (MOSFETs) may be used.

When supplying electric power discharged from the battery 150 to the first motor-generator 110 or the second motor-generator 120, the voltage is stepped up by the converter 200. Conversely, when charging electric power generated by the first motor-generator 110 or the second motor-generator 120 to the battery 150, the voltage is stepped down by the converter 200.

A system voltage VH between the converter 200, and the first inverter 210 and the second inverter 220 is detected by a voltage sensor 180. The detection result of the voltage sensor 180 is output to the MG-ECU 172.

The first inverter 210 includes a U-phase arm, a V-phase arm, and a W-phase arm. The U-phase arm, the V-phase arm, and the W-phase arm are connected in parallel. The U-phase arm, the V-phase arm, and the W-phase arm each have two npn-type transistors that are connected in series. A diode that allows current to flow from an emitter side to a collector side is connected between a collector and an emitter of each npn-type transistor. The connecting point of each npn-type transistor of each arm is connected at an end portion that is different from a neutral point 112 of each coil of the first motor-generator 110.

The first inverter 210 converts direct current supplied from the battery 150 into alternating current and then supplies this alternating current to the first motor-generator 110. Also, the first inverter 210 converts alternating current generated by the first motor-generator 110 into direct current.

The second inverter 220 includes a U-phase arm, a V-phase arm, and a W-phase arm. The U-phase arm, the V-phase arm, and the W-phase arm are connected in parallel. The U-phase arm, the V-phase arm, and the W-phase arm each have two npn-type transistors that are connected in series. A diode that allows current to flow from an emitter side to a collector side is connected between a collector and an emitter of each npn-type transistor. The connecting point of each npn-type transistor of each arm is connected at an end portion that is different from a neutral point 122 of each coil of the second motor-generator 120.

The second inverter 220 converts direct current supplied from the battery 150 into alternating current and then supplies this alternating current to the second motor-generator 120. Also, the second inverter 220 converts alternating current generated by the second motor-generator 120 into direct current.

The converter 200, the first inverter 210, and the second inverter 220 are all controlled by the MG-ECU 172. The MG-ECU 172 may serve to detect a failure (i.e., an abnormality) in the converter 200, the first inverter 210, and the second inverter 220, as well as to control the converter 200, the first inverter 210, and the second inverter 220.

For example, a failure is detected when a system voltage VH detected by the voltage sensor 180, an input / output current detected by a current sensor, not shown, or the temperature of the converter 200, the first inverter 210, or the second inverter 220 detected by a temperature sensor, not shown, or the like is equal to or greater than a threshold value. If the MG-ECU 172 detects a failure, a failure signal indicative of the failure is output from the MG-ECU 172 to the PM-ECU 170.

The SMR 230 is provided between the battery 150 and the charger 240. The SMR 230 is a relay that switches between a state in which the battery 150 is connected with the electrical system and a state in which the battery 150 is disconnected from the electrical system. When the SMR 230 is open, the battery 150 is disconnected from the electrical system. When the SMR 230 is closed, the battery 150 is connected to the electrical system.

That is, when the SMR 230 is open, the battery 150 is electrically disconnected from the converter 200 and the charger 240 and the like. When the SMR 230 is closed, the battery 150 is electrically connected to the converter 200 and the charger 240 and the like.

The state of the SMR 230 is controlled by the PM-ECU 170. For example, when the PM-ECU 170 is turned on, the SMR 230 closes. When the PM-ECU 170 is turned off, the SMR 230 opens.

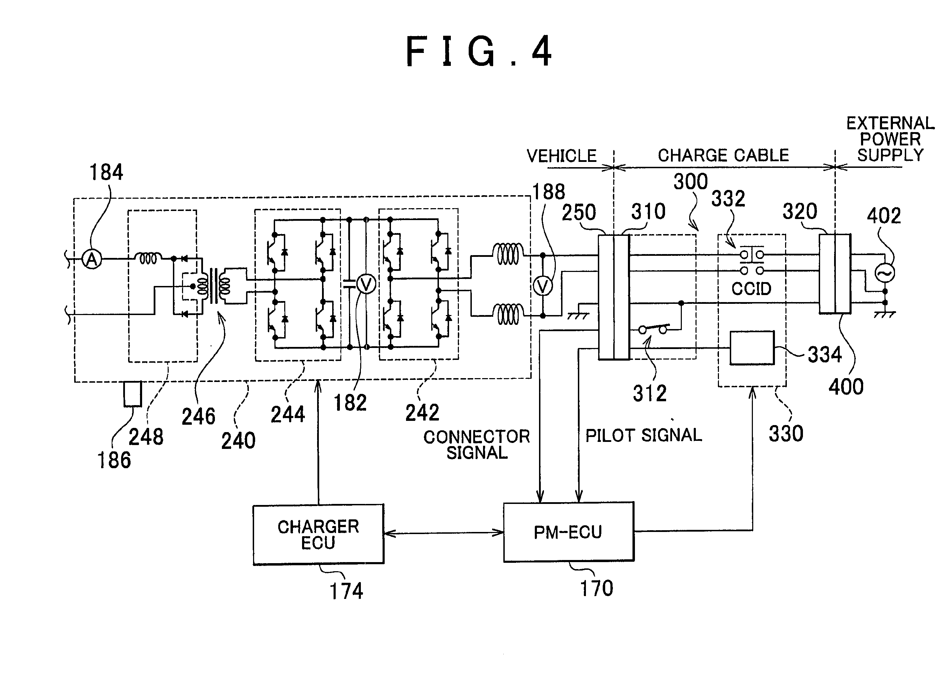

The charger 240 is connected between the battery 150 and the converter 200. As shown in FIG 4, the charger 240 includes an AC/DC converter circuit 242, a DC/AC converter circuit 244, an insulated transformer 246, and a rectifier circuit 248.

The AC/DC converter circuit 242 is formed from a single phase bridge circuit. The AC/DC converter circuit 242 converts alternating current (AC) power into direct current (DC) power based on a drive signal from the charger ECU 174. Moreover, the AC/DC converter circuit 242 may also serve as a step-up chopper circuit that steps up the voltage by using the coil as a reactor.

The DC/AC converter circuit 244 is formed from a single phase bridge circuit. The DC/AC converter circuit 244 converts DC power into high frequency AC power based on a drive signal from the charger ECU 174, and outputs this high frequency AC power to the insulated transformer 246.

The insulated transformer 246 includes a core made of magnetic material, and a primary coil and a secondary coil that are wound around the core. The primary coil and the secondary coil are electrically insulated and are connected to the DC/AC converter circuit 244 and the rectifier circuit 248, respectively. The insulated transformer 246 converts high frequency AC power received from the DC/AC converter circuit 244 to a voltage level corresponding to the turn ratio of the primary coil and the secondary coil, and outputs it to the rectifier circuit 248. The rectifier circuit 248 then rectifies the AC power output from the insulated transformer 246 to DC power.

The voltage between the AC/DC converter circuit 242 and the DC/AC converter circuit 244 (i.e., the voltage between terminals of a smoothing capacitor) is detected by a voltage sensor 182 and a signal indicative of the detection result is received by the charger ECU 174. Also, the output current of the charger 240 is detected by a current sensor 184 and a signal indicative of the detection result is received by the charger ECU 174. Further, the temperature of the charger 240 is detected by a temperature sensor 186, and a signal indicative of the detection result is received by the charger ECU 174.

When the battery 150 is charged from an external power supply outside the vehicle, the charger ECU 174 generates a drive signal to drive the charger 240 and outputs it to the charger 240. Other than serving to control the charger 240, the charger ECU 174 also serves to detect a failure of the charger 240. A failure of the charger 240 is detected when, for example, the voltage detected by the voltage sensor 182, the current detected by the current sensor 184, or the temperature detected by the temperature sensor 186, or the like becomes equal to or greater than a threshold value. If a failure is detected, a failure signal indicative of the failure is output from the charger ECU 174 to the PM-ECU 170.

The inlet 250 is provided on a side portion of the plug-in hybrid vehicle, for example. A connector 310 of a charge cable 300 that connects the plug-in hybrid vehicle with an external power supply 402 outside the plug-in hybrid vehicle connects to the inlet 250.

The charge cable 300 that connects the plug-in hybrid vehicle to the external power supply 402 includes the connector 310, a plug 320, and a Charging Circuit Interrupt Device (CCID) 330.

The connector 310 of the charge cable 300 connects to the inlet 250 provided in the plug-in hybrid vehicle. The connector 310 is provided with a switch 312. When the switch 312 is closed while the connector 310 of the charge cable 300 is connected to the inlet 250 provided in the plug-in hybrid vehicle, a connector signal CNCT indicating that the connector 310 of the charge cable 300 is connected to the inlet 250 provided in the plug-in hybrid vehicle is input to the PM-ECU 170.

The switch 312 opens and closes in conjunction with a retaining piece 316 that retains the connector 310 of the charge cable 300 in the inlet 250 of the plug-in hybrid vehicle. The retaining piece 316 pivots in response to the operator pushing a button 314 provided on the connector 310.

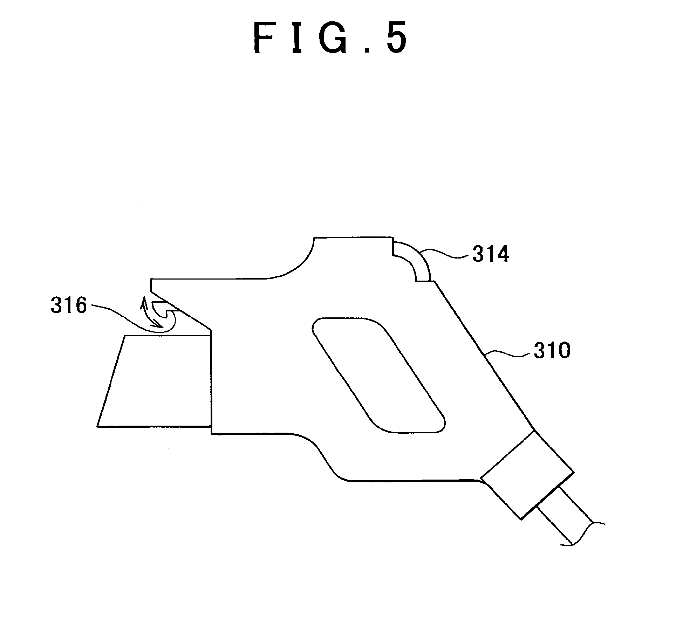

For example, when the operator releases a finger from the button 314 of the connector 310, shown in FIG. 5, while the connector 310 of the charge cable 300 is connected to the inlet 250 provided in the plug-in hybrid vehicle, the retaining piece 316 engages with the inlet 250 provided in the plug-in hybrid vehicle, and the switch 312 closes. When the operator presses the button 314, the retaining piece 316 disengages from the inlet 250, and the switch 312 opens. Incidentally, the method for opening and closing the switch 312 is not limited to this.

Returning now to FIG 4, the plug 320 of the charge cable 300 connects to an outlet 400 provided in a house or the like. AC power from the external power supply 402 outside the plug-in hybrid vehicle is supplied to the outlet 400.

The CCID 330 has a relay 332 and a control pilot circuit 334. When the relay 332 is open, the path that supplies electric power from the external power supply 402 outside the plug-in hybrid vehicle to the plug-in hybrid vehicle is interrupted. When the relay 332 is closed, electric power is able to be supplied from the external power supply 402 outside the plug-in hybrid vehicle to the plug-in hybrid vehicle. The state of the relay 332 is controlled by the PM-ECU 170 while the connector 310 of the charge cable 300 is connected to the inlet 250 of the plug-in hybrid vehicle.

The control pilot circuit 334 outputs a pilot signal (i.e., a rectangular wave signal) CPLT to a control pilot line when the plug 320 of the charge cable 300 is connected to the outlet 400, i.e., is connected to the external power supply 402, and the connector 310 is connected to the inlet 250 provided in the plug-in hybrid vehicle. The pilot signal is oscillated by an oscillator, not shown, provided in the control pilot circuit 334.

When the plug 320 of the charge cable 300 is connected to the outlet 400, the control pilot circuit 334 is able to output a constant pilot signal CPLT even if the connector 310 is disconnected from the inlet 250 provided in the plug-in hybrid vehicle. However, the PM-ECU 170 is unable to detect a pilot signal CPLT output when the connector 310 is disconnected from the inlet 250 provided in the plug-in hybrid vehicle.

When the SMR 230 of the charge cable 300 is connected to the outlet 400 and the connector 310 is connected to the inlet 250 of the plug-in hybrid vehicle, the control pilot circuit 334 oscillates a pilot signal CPLT of a preset pulse width (i.e., duty cycle).

The current capacity that is able to be supplied is reported to the plug-in hybrid vehicle by the pulse width of the pilot signal CPLT. For example, the current capacity of the charge cable 300 is reported to the plug-in hybrid vehicle. The pulse width of the pilot signal CPLT is constant and does not rely on the voltage and the current of the external power supply 402.

Meanwhile, the pulse width of the pilot signal CPLT may differ if a different type of charge cable is used. That is, the pulse width of the pilot signal CPLT may be set for each type of charge cable.

In this example embodiment, electric power supplied from the external power supply 402 is charged to the battery 150 while the plug-in hybrid vehicle is connected to the external power supply 402 by the charge cable 300. During charging of the battery 150, the SMR 230 and the relay 332 in the CCID 330 are closed.

An AC voltage VAC of the external power supply 402 is detected by a voltage sensor 188 provided in the plug-in hybrid vehicle. A signal indicative of the detected voltage VAC is output to the PM-ECU 170.

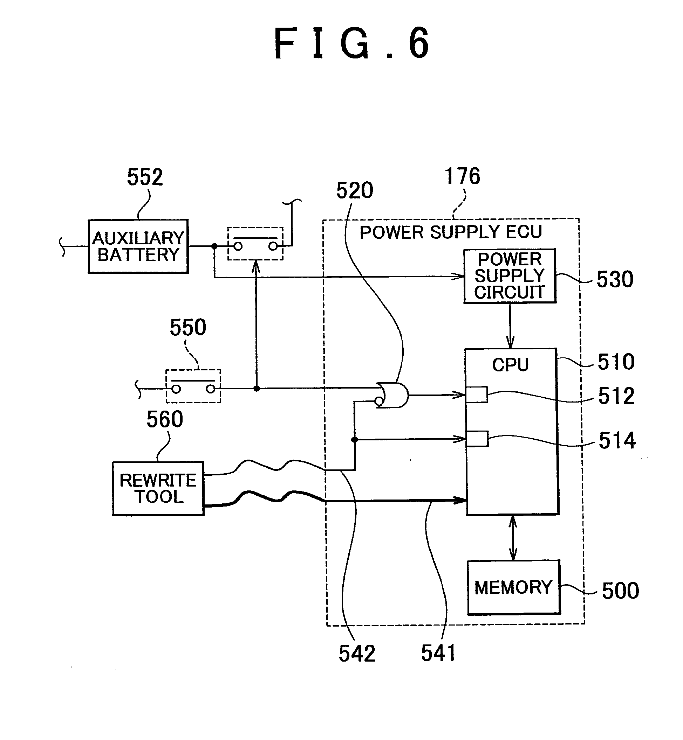

Next, the power supply ECU 176 will be described in greater detail with reference to FIG 6. Incidentally, the structure described below may also be applied to various ECUs, such as the PM-ECU 170, the MG-ECU 172, and the charger ECU 174, and the like.

The power supply ECU 176 includes memory 500, a CPU 510, a reset circuit 520, a power supply circuit 530, a first communication line 541, and a second communication line 542.

The memory 500 is nonvolatile memory such as Read Only Memory (ROM). The memory 500 stores programs and the like that are executed by the CPU 510. The programs stored in the memory 500 are rewritable.

The CPU 510 reads the programs stored in the memory 500, and executes processes for controlling the equipment based on the programs. In this example embodiment, a process for starting the PM-ECU 170 is executed. Incidentally, the process that is executed is not limited to this. The CPU 510 may serve as the processing portion of the invention.

The CPU 510 includes a reset terminal 512 and a rewrite setting terminal 514. The reset terminal 512 receives a reset signal from the reset circuit 520. This reset signal is a signal instructing the CPU 510 to reset. When the reset terminal 512 receives the reset signal, the CPU 510 resets the process. That is, the CPU 510 is reset. Accordingly, the CPU 510 executes the new rewritten program from the beginning.

In this example embodiment, the CPU 510 is reset when the level of the reset signal is low. Incidentally, the CPU 510 may also be reset when the level of the reset signal is hi.

A rewrite command signal is input to the rewrite setting terminal 514 via the second communication line 542. This rewrite command signal is a signal instructing the CPU 510 to rewrite a program stored in the memory 500. When the rewrite setting terminal 514 receives the rewrite command signal, the CPU 510 shifts from a normal mode in which it executes a process for controlling equipment to a rewrite mode in which it executes a process that rewrites a program stored in the memory 500. Once the CPU 510 has been reset, the CPU 510 returns from the rewrite mode to the normal mode. In this example embodiment, when the level of the rewrite command signal is hi, the CPU 510 operates in the rewrite mode. Incidentally, the CPU 510 may also operate in the rewrite mode when the level of the rewrite command signal is low.

If an ignition switch 550 is turned off while the rewrite command signal is input, the reset circuit 520 outputs the reset signal to the CPU 510. More specifically, if the level of the rewrite command signal is hi and the level of an ignition signal is low, the reset signal becomes low.

The level of the ignition signal becomes hi when the ignition switch 550 is turned on, and becomes low when the ignition switch 550 is turned off. The ignition switch 550 is operated manually by the user, for example.

The power supply circuit 530 stably supplies electric power supplied from the auxiliary battery 552 to the CPU 510.

The first communication line 541 connects a rewrite tool 560 that is connected to the power supply ECU 176 to the CPU 510, and transmits data output from the rewrite tool 560 to the CPU 510. For example, the data of a new program stored in the memory 500 is transmitted to the CPU 510 from the rewrite tool 560. Incidentally, the first communication line 541 may serve as the first transmitting portion of the invention, and the rewrite tool may serve as the external device of the invention.

The second communication line 542 connects the rewrite tool 560 to the reset circuit 520, and transmits the rewrite command signal output from the rewrite tool 560 to the reset circuit 520. The second communication line 542 is also connected to the rewrite setting terminal 514 of the CPU 510, in addition to the reset circuit 520. Incidentally, the second communication line 542 may serve as the second transmitting portion of the invention.

Now the operation of the power supply ECU 176 of this example embodiment based on the structure described above will be described.

When the rewrite tool 560 is not connected to the power supply ECU 176, the level of the rewrite command signal is low. In this case, the CPU 510 operates in the normal mode. Therefore, the CPU 510 executes a process bases on the program stored in the memory 500. Also, the level of the reset signal is hi. Therefore, the CPU 510 is not reset.

If the rewrite tool 560 is connected to the power supply ECU 176 and the level of the rewrite command signal is hi, the CPU 510 operates in the rewrite mode. While the ignition switch 550 is on, the level of the reset signal is hi. Therefore, the CPU 510 erases the old program from the memory 500 and writes a new program.

When the ignition switch 550 is turned off, the level of the reset signal becomes low. As a result, the CPU 510 is reset.

In this way, after rewriting the program, the CPU 510 is reset by an operator simply turning the ignition switch 550 off. The execution itself of the reset operation is performed according to a determination made by the operator, so for example, if the rewriting of a program in the memory 500 is interrupted, a complex program that takes into account a case in which the operation of the CPU 510 is abnormal or the like is not necessary. Also, the operator is able to reset the CPU 510 without opening the hood and turning a bolt. As a result, the CPU 510 after a program has been rewritten can be reset without the need for a complex program and a complicated operation.

In this example embodiment, the power supply ECU 176 to which electric power is continuously supplied even when the ignition switch 550 is turned off may also be used as electronically controlled equipment. In this case, the process (i.e., the CPU 510) will not be reset if the ignition switch 550 is off and the second signal commanding that the program stored in the memory be rewritten is not input. That is, the process (i.e., the CPU 510) will only be reset if the ignition switch 550 is off and the rewrite command signal is received by the reset circuit 520.

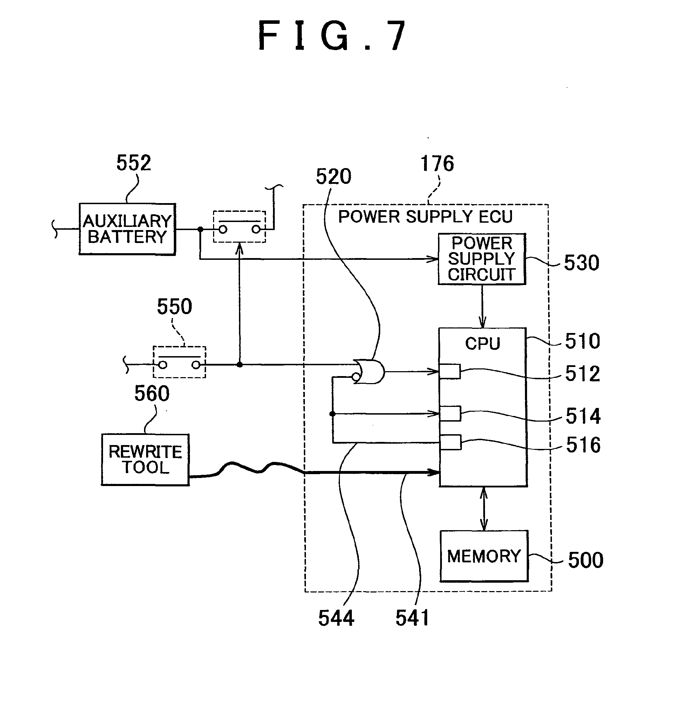

Next, a second example embodiment of the invention will be described with reference to FIG 7. In this second example embodiment, the CPU 510 also includes a rewrite command signal output terminal 516. Upon receiving a rewrite command from the rewrite tool 560 via the first communication line 541, the CPU 510 outputs a rewrite signal. That is, the level of the rewrite signal becomes hi. The CPU 510 outputs a rewrite signal based on a program for outputting a rewrite signal, for example. Incidentally, the function that outputs the rewrite signal may also be realized by hardware. The rewrite command is a command for rewriting a program stored in the memory 500.

A second communication line 544 connects the rewrite command signal output terminal 516 of the CPU 510 to the reset circuit 520, and transmits the rewrite command signal output from the CPU 510 to the reset circuit 520. The second communication line 544 also transmits the rewrite command signal output from the rewrite command signal output terminal 516 of the CPU 510 to the rewrite setting terminal 514.

The other structure is the same as it is in the first example embodiment described above. Therefore, details thereof will not be repeated here.

Next, the operation of the power supply ECU 176 of the second example embodiment based on the structure described above will be described.

When the rewrite tool 560 is connected to the power supply ECU 176 and a rewrite command is transmitted from the rewrite tool 560 to the CPU 510, the CPU 510 changes the level of the rewrite command signal to hi. Accordingly, the CPU 510 operates in the rewrite mode. The level of the reset signal is hi while the ignition switch 550 is on. Therefore, the CPU 510 erases the old program from the memory 500 and writes a new program.

When the ignition switch 550 is turned off, the level of the reset signal becomes low. As a result, the CPU 510 is reset.

In this way, similar effects as those obtained with the first example embodiment described above can also be obtained with the second example embodiment.

The example embodiments disclosed herein are in all respects merely examples and should in no way be construed as limiting. The scope of the invention is indicated not by the foregoing description but by the scope of the claims for patent, and is intended to include all modifications that are within the scope and meanings equivalent to the scope of the claims for patent.

## Claims

1. A constantly powered electronic control unit (176) comprising:
a processing portion (510) configured to execute a process that controls equipment based on a program stored in memory (500), reset the process upon receiving a first signal commanding a process reset, and rewrite the program stored in the memory (500) upon receiving a second signal, from an external device (560) connected to the electronic control unit, instructing the processing portion (510) to rewrite the program ; and
a resetting portion (520) configured to output the first signal to the processing portion in response to an ignition switch being turned off only when the ignition switch is turned off while said second signal instructing the processing portion (510) to rewrite the program stored in the memory is input into the resetting portion from said external device (560) which is connected to the electronic control unit.

2. The electronic control unit according to claim 1, further comprising:
a first transmitting portion (541) configured to connect the external device (560) to the processing portion and transmit data output from the external device (560) to the processing portion; and
a second transmitting portion (542) configured to connect the external device (560) to the resetting portion and transmit the second signal output from the external device (560) to the resetting portion.

3. A constantly powered electronic control unit (176) comprising:
a processing portion configured to execute a process that controls equipment based on a program stored in memory, and reset the process upon receiving a first signal commanding a process reset;
a resetting portion (520) configured to output the first signal to the processing portion in response to an ignition switch being turned off only when the ignition switch is turned off while a second signal instructing the processing portion (510) to rewrite the program stored in the memory is input into the resetting portion; and
a first transmitting portion (541) configured to connect an external device (560) that is connected to the electronic control unit to the processing portion and transmit data output from the external device (560) to the processing portion,
wherein the processing portion is configured to output the second signal upon receiving a command from the external device to rewrite the program stored in the memory, and the electronic control unit further includes a second transmitting portion configured to connect the processing portion to the resetting portion and transmit the second signal output from the processing portion to the resetting portion.

4. The electronic control unit according to any one of claims 1 to 3, wherein the processing portion does not reset the process if the ignition switch is off and the second signal is not input.

5. A control method of a constantly powered electronic control unit that includes a processing portion (510) that executes a process that controls equipment based on a program stored in memory, resets the process upon receiving a first signal commanding a process reset, and rewrites the program stored in the memory upon receiving a second signal, from an external device (560) connected to the electronic control unit, instructing the processing portion (510) to rewrite the program, and a resetting portion for outputting said first signal, the control method comprising:
outputting the first signal to the processing portion in response to an ignition switch being turned off only when the ignition switch is turned off while the second signal instructing the processing portion (510) to rewrite the program stored in the memory is input into the resetting portion from said external device which is connected to the electronic control unit.

6. The control method according to claim 5, wherein the processing portion does not reset the process if the ignition switch is off and the second signal is not input.

## Patentansprüche

1. Kontinuierlich mit Strom versorgte elektronische Steuereinheit (176), umfassend:
einen Verarbeitungsabschnitt (510), der dafür konfiguriert ist, einen Prozess auszuführen, der Ausrüstung auf der Grundlage eines Programms steuert, das in einem Speicher (500) gespeichert ist, den Prozess zurückzusetzen, wenn ein erstes Signal, das eine Prozessrücksetzung befiehlt, empfangen wurde, und das in dem Speicher (500) gespeicherte Programm zu überschreiben, wenn ein zweites Signal von einer externen Vorrichtung (560), die mit der elektronischen Steuereinheit verbunden ist, empfangen wurde, das den Verarbeitungsabschnitt (510) anweist, das Programm zu überschreiben, und
einen Rücksetzungsabschnitt (520), der dafür konfiguriert ist, das erste Signal erst dann in Reaktion auf das Ausschalten eines Zündschalters an den Verarbeitungsabschnitt auszugeben, wenn der Zündschalter ausgeschaltet ist, während das zweite Signal, das den Verarbeitungsabschnitt (510) anweist, das in dem Speicher gespeicherte Programm zu überschreiben, von der externen Vorrichtung (560) aus, die mit der elektronischen Steuereinheit verbunden ist, in den Rücksetzungsabschnitt eingegeben wird.

2. Elektronische Steuereinheit nach Anspruch 1, ferner umfassend:
einen ersten Sendeabschnitt (541), der dafür konfiguriert ist, die externe Vorrichtung (560) mit dem Verarbeitungsabschnitt zu verbinden und Daten, die von der externen Vorrichtung (560) ausgegeben wurden, an den Verarbeitungsabschnitt zu senden, und
einen zweiten Sendeabschnitt (542), der dafür konfiguriert ist, die externe Vorrichtung (560) mit dem Rücksetzungsabschnitt zu verbinden und das zweite Signal, das von der externen Vorrichtung (560) ausgegeben wurde, an den Rücksetzungsabschnitt zu senden.

3. Kontinuierlich mit Strom versorgte elektronische Steuereinheit (176), umfassend:
einen Verarbeitungsabschnitt, der dafür konfiguriert ist, einen Prozess auszuführen, der Ausrüstung auf der Grundlage eines Programms steuert, das in einem Speicher gespeichert ist, und den Prozess zurückzusetzen, wenn ein erstes Signal empfangen wurde, das eine Prozessrücksetzung befiehlt,
einen Rücksetzungsabschnitt (520), der dafür konfiguriert ist, das erste Signal erst dann in Reaktion auf das Ausschalten eines Zündschalters an den Verarbeitungsabschnitt auszugeben, wenn der Zündschalter ausgeschaltet ist, während das zweite Signal, das den Verarbeitungsabschnitt (510) anweist, das in dem Speicher gespeicherte Programm zu überschreiben, in den Rücksetzungsabschnitt eingegeben wird, und
einen ersten Sendeabschnitt (541), der dafür konfiguriert ist, eine externe Vorrichtung (560), die mit der elektronischen Steuereinheit verbunden ist, mit dem Verarbeitungsabschnitt zu verbinden und Daten, die von der externen Vorrichtung (560) ausgegeben wurden, an den Verarbeitungsabschnitt zu senden,
wobei der Verarbeitungsabschnitt dafür konfiguriert ist, das zweite Signal auszugeben, nachdem ein Befehl von der externen Vorrichtung empfangen wurde, das in dem Speicher gespeicherte Programm zu überschreiben, und die elektronische Steuereinheit des Weiteren einen zweiten Sendeabschnitt enthält, der dafür konfiguriert ist, den Verarbeitungsabschnitt mit dem Rücksetzungsabschnitt zu verbinden und das zweite Signal, das von dem Verarbeitungsabschnitt ausgegeben wurde, an den Rücksetzungsabschnitt zu senden.

4. Elektronische Steuereinheit nach einem der Ansprüche 1 bis 3, wobei der Verarbeitungsabschnitt den Prozess nicht zurücksetzt, wenn der Zündschalter aus ist und das zweite Signal nicht eingegeben wird.

5. Steuerungsverfahren für eine kontinuierlich mit Strom versorgte elektronische Steuereinheit, die enthält: einen Verarbeitungsabschnitt (510), der einen Prozess ausführt, der Ausrüstung auf der Grundlage eines Programms steuert, das in einem Speicher gespeichert ist; den Prozess zurücksetzt, wenn ein erstes Signal, das eine Prozessrücksetzung befiehlt, empfangen wurde, und das in dem Speicher gespeicherte Programm überschreibt, nachdem von einer externen Vorrichtung (560), die mit der elektronischen Steuereinheit verbunden ist, ein zweites Signal empfangen wurde, das den Verarbeitungsabschnitt (510) anweist, das Programm zu überschreiben, und einen Rücksetzungsabschnitt zum Ausgeben des ersten Signals, wobei das Steuerungsverfahren umfasst:
Ausgeben des ersten Signals an den Verarbeitungsabschnitt in Reaktion auf das Ausschalten eines Zündschalters erst dann, wenn der Zündschalter ausgeschaltet ist, während das zweite Signal, das den Verarbeitungsabschnitt (510) anweist, das in dem Speicher gespeicherte Programm zu überschreiben, von der externen Vorrichtung aus, die mit der elektronischen Steuereinheit verbunden ist, in den Rücksetzungsabschnitt eingegeben wird.

6. Steuerungsverfahren nach Anspruch 5, wobei der Verarbeitungsabschnitt den Prozess nicht zurücksetzt, wenn der Zündschalter aus ist und das zweite Signal nicht eingegeben wird.

## Revendications

1. Unité électronique de commande constamment alimentée (176) comprenant :
une section (510) de traitement constituée pour exécuter un traitement qui commande un équipement en se basant sur un programme mémorisé dans une mémoire (500), pour réinitialiser le traitement à réception d'un premier signal ordonnant une réinitialisation de traitement, et pour réécrire le programme mémorisé dans la mémoire (500) à réception d'un second signal, provenant d'un dispositif externe (560) connecté à l'unité électronique de commande, ordonnant à la section (510) de traitement de réécrire le programme ; et
une section (520) de réinitialisation constituée pour sortir le premier signal vers la section de traitement en réponse à la coupure du contact seulement lorsque l'on coupe le contact pendant que ledit second signal ordonnant à la section (510) de traitement de réécrire le programme mémorisé dans la mémoire est entré dans la section de réinitialisation à partir dudit dispositif externe (560) qui est connecté à l'unité électronique de commande.

2. Unité électronique de commande selon la revendication 1, comprenant en outre :
une première section (541) de transmission constituée pour connecter le dispositif externe (560) à la section de traitement et pour transmettre, à la section de traitement, des données sorties du dispositif externe (560) ; et
une seconde section (542) de transmission constituée pour connecter le dispositif externe (560) à la section de réinitialisation et pour transmettre, à la section de réinitialisation, le second signal sorti du dispositif externe (560).

3. Unité électronique de commande constamment alimentée (176) comprenant :
une section de traitement constituée pour exécuter un traitement qui commande un équipement en se basant sur un programme mémorisé dans une mémoire, et pour réinitialiser le traitement à réception d'un premier signal ordonnant une réinitialisation de traitement ; et
une section (520) de réinitialisation constituée pour sortir le premier signal vers la section de traitement en réponse à la coupure du contact seulement lorsque l'on coupe le contact pendant qu'un second signal ordonnant à la section (510) de traitement de réécrire le programme mémorisé dans la mémoire est entré dans la section de réinitialisation ; et
une première section (541) de transmission constituée pour connecter, à la section de traitement, un dispositif externe (560) qui est connecté à l'unité électronique de commande et pour transmettre, à la section de traitement, des données sorties du dispositif externe (560),
dans laquelle la section de traitement est constituée pour sortir le second signal à réception d'une instruction provenant du dispositif externe pour réécrire le programme mémorisé dans la mémoire, et dans laquelle l'unité électronique de commande inclut une seconde section de transmission constituée pour connecter la section de traitement à la section de réinitialisation et pour transmettre, à la section de réinitialisation, le second signal sorti de la section de traitement.

4. Unité électronique de commande selon l'une quelconque des revendications 1 à 3, dans laquelle la section de traitement ne réinitialise pas le traitement si l'on coupe le contact et que le second signal n'est pas entré.

5. Procédé de commande d'une unité électronique de commande constamment alimentée qui inclut une section (510) de traitement qui effectue un traitement qui commande un équipement en se basant sur un programme mémorisé dans une mémoire, qui réinitialise le traitement à réception d'un premier signal ordonnant une réinitialisation de traitement, et qui réécrit le programme mémorisé dans la mémoire à réception d'un second signal, provenant d'un dispositif externe (560) connecté à l'unité électronique de commande, ordonnant à la section (510) de traitement de réécrire le programme, et une section de réinitialisation destinée à sortir ledit premier signal, le procédé de commande comprenant :
la sortie du premier signal vers la section de traitement en réponse à la coupure du contact seulement lorsque l'on coupe le contact pendant que le second signal ordonnant à la section (510) de traitement de réécrire le programme mémorisé dans la mémoire est entré dans la section de réinitialisation à partir dudit dispositif externe qui est connecté à l'unité électronique de commande.

6. Procédé de commande selon la revendication 5, dans lequel la section de traitement ne réinitialise pas le traitement si l'on coupe le contact et que le second signal n'est pas entré.
